# EUROPÄISCHE PATENTSCHRIFT

(11) **EP 0 865 998 B1**
(45) Veröffentlichungstag und Bekanntmachung des Hinweises auf die Patenterteilung: **03.11.1999**
(21) Anmeldenummer: 97121313.7
(22) Anmeldetag: 04.12.1997
(51) Int. Cl.: B65D 88/12, B65D 88/74, B65D 90/02

(54) **Container zum Lagern und Verrotten organischer Abfälle**
Container for the decomposition and disposal of organic waste
Conteneur pour la décomposition et élimination des déchets organiques

(30) Priorität: 10.03.1997 DE 19709521
(43) Veröffentlichungstag der Anmeldung: 23.09.1998
(73) Patentinhaber: Metallgesellschaft Aktiengesellschaft, 60325 Frankfurt am Main (DE)
(72) Erfinder: Dolle, Lothar, 44627 Herne (DE); Vollmer, Friedel, 44652 Herne (DE)

(56) Entgegenhaltungen:
- EP-A- 0 444 334
- CH-A- 128 362
- DE-A- 1 684 734
- DE-A- 19 523 225

## Beschreibung

Die Erfindung betrifft einen geschlossenen quaderförmigen Container zum Lagern und Verrotten organischer Abfälle, bestehend aus Seitenwänden, Portalwänden, Dach und Boden, einem durchgehenden, im Abstand vom Boden unter Bildung eines Zwischenraums mit Zu- und Ableitungen von Luft für den Verrottungsvorgang und Ableitung von gebildeter Flüssigkeit angeordneten. Lochboden, wenigstens einer im Dach befindlichen und mit einem Deckel verschließbaren Beladeluke und der zum Entleeren horizontal zu einer der Seitenwände hin klappbare Stirnportalwand.

Solche Container erfüllen im Rahmen eines modernen Abfallwirtschaftskonzepts wichtige Aufgaben beim Verwertungsgebot fermentierbarer organischer Abfälle. Von besonderem Vorteil ist dabei die quaderförmige Bauweise der Container, die eine einfache Handhabung des Rotteguts gestatten, weil sie bei Bedarf für die Zeit des biologischen Abbau- und Umwandlungsprozesses (Verrottungsprozeß) übereinander stapelbar und somit eine bestmögliche Flächennutzung erreichbar ist. Mittels verschiedener Heb- und Transportsysteme, wie Lkw-Abrollkipper, Kranbahn, Brückenkran, Containerkran sind die Container transportierbar, entleerbar und umsetzbar, so daß der Rottegutfluß logistikgerecht ist und die Handhabungsvorgänge klein sind.

Aus der EP-B-0 444 334 sind Container mit den eingangs beschriebenen Merkmalen bekannt. Die Beladung des Containers erfolgt über wenigstens eine im Dach des Containers befindliche Luke, die mittels eines, mit Scharnieren angeschlagenen Deckels verschließbar ist. Das Entleeren des Containers erfolgt durch Schwenken der klappbaren Stirnportalwand zu einer der Seitenwände oder auch nach oben zum Dach hin. Während des Verrottungsvorgangs ist die stirnseitige Portalwand verschlossen. Über den von dem Boden des Containers und dem im Abstand davon angeordneten Lochboden gebildeten Zwischenraum wird die für den Verrottungsvorgang benötigte Luft bzw. die gebildete Abluft über in der Stirnseite befindliche Anschlußstutzen zu- bzw. abgeleitet.

Nach Beendigung des Verrottungsprozesses wird beispielsweise der Container zum Entleeren auf einen in Längsrichtung um bis zu 60° kippbaren Rahmen aufgesetzt und mit diesem starr gekuppelt. Nach dem Öffnen der stirnseitigen Portalwand wird der Rahmen und damit der Container hochgekippt, so daß das Rottegut aus dem Container ausströmen kann (DE-A-195 23 225).

Die Herstellung solcher Container ist mit einem beachtlichen Aufwand verbunden, da die vorgefertigten Bauteile (Seitenwände, Portalwände, Dach, Boden) auf der Bodenfläche der Montagehalle ausgelegt und dann als Ganzes geschweißt werden müssen, so daß für den Zusammenbau der Bauteile zum Container eine relativ große Fertigungsfläche bereitgestellt werden muß. Darüber hinaus bestehen die Bauteile für den Container vollständig aus Baustahl, so daß eine Auskleidung der Innenseite mit einer 400 µm dicken Kunststoffschicht erforderlich ist, um die Korrorion des Containers, ausgelöst durch die beim Verrottungsvorgang entstehenden Säuren, weitgehend zu vermeiden.

Es ist die Aufgabe der vorliegenden Erfindung, einen Container des gattungsgemäßen, eingangs beschriebenen Aufbaus bereitzustellen, zu dessen Montage eine möglichst kleine Fertigungsfläche erforderlich ist, der unter weitgehender Verwendung von Systembauelementen zusammenbaubar ist, der optisch eine gute Wirkung besitzt, der nur eine geringe Wartung benötigt und dessen Montage möglichst einfach ist.

Die Lösung dieser Aufgabe besteht bei dem gattungsmäßig gestalteten Container in den Merkmalen des kennzeichnenden Teils des Patentanspruchs 1.

Die Patentansprüche 2 bis 10 stellen vorteilhafte Ausgestaltungen des erfindungsgemäß gestalteten Containers dar.

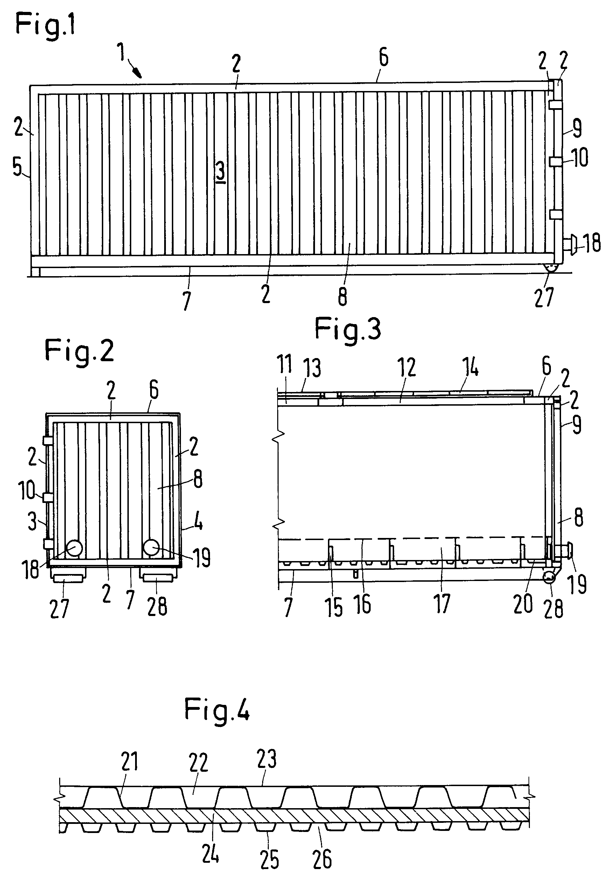

Die Erfindung ist in der Zeichnung beispielhaft dargestellt und wird nachfolgend näher erläutert. Es zeigen
- Fig. 1: eine schematische Seitenansicht des Containers,
- Fig. 2: eine schematische Ansicht der klappbaren Stirnportalwand des Containers,
- Fig. 3: einen Teillängsschnitt durch den Container entlang von dessen senkrechter Schnittebene,
- Fig. 4: einen Teilquerschnitt durch eine die Seitenwände, Portalwände, Dach und Boden des Containers bildende Profiltafel.

Der Container (1) mit einer Gesamtlänge von 7450 mm, einer Gesamtbreite von 7310 mm und einer Gesamthöhe von 4270 mm besteht aus einem durch Verbindungsschweißen von stranggepreßten rechteckigen Hohlprofilen (2) aus Baustahl gefügten quaderförmigen Rahmen, wobei in die Rahmenfelder der Seitenwände (3, 4), der Heckportalwand (5), des Daches (6) und des Bodens (7) jeweils eine Profiltafel (8) in Sandwich-Konstruktion eingesetzt und umlaufend mit den angrenzenden rechteckigen Hohlprofilen (2) verschweißt ist. Die auf- und zuklappbare Stirnportalwand (9) besteht aus einem rechteckigen, durch Verbindungsschweißen rechteckiger Hohlprofile (2) gefertigten Rahmen, in dessen Rahmenfeld eine Profiltafel (8) in Sandwich-Konstruktion angefügt und umlaufend mit den angrenzenden Hohlprofilen (2) verschweißt ist. An einem der senkrecht verlaufenden Hohlprofile (2) des Rahmens der Stirnportalwand (9) sind Scharniere (10) angebracht, die an das unmittelbar benachbarte, senkrecht verlaufende Hohlprofil (2) der Seitenwand (3) angeschlagen sind. Im Dach (6) befinden sich zwei Beladeluken (11, 12), die über die Deckel (13, 14) verschlossen sind. Im Abstand vom Boden (7) ist ein durchgehender, auf Abstandhaltern (15) aufliegender Lochboden (16) angeordnet. In den vom Boden (7) und Lochboden (16) gebildeten Zwischenraum (17) wird Luft über die in die Stirnportalwand (9) eingesetzten Rohrstutzen (18, 19) zu- und abgeleitet. Zur Ableitung der sich auf dem Boden (7) ansammelnden Flüssigkeiten ist in dem an die Stirnportalwand (9) angrenzenden Abschnitt des Bodens (7) eine quer zur Längsrichtung des Containers sich erstreckende Sammel- und Ablaufrinne vorgesehen, über die Flüssigkeit über einen nicht dargestellten in der Seitenwand (8) eingesetzten Ablauf den Container (1) verlassen kann.

Die einzelnen Profiltafeln (8) sind aufgebaut aus einem 3,0 mm dicken, als tragender Kern dienenen Baustahlblech (21) mit Trapezsicken (22), das das Ausbeulen oder Ausknicken des auf seiner Innenseite durch Punktschweißen befestigten glattflächigen 3,0 mm dicken Blechs (23) aus V2A-Stahl verhindert. Um im Hinblick auf einen optimalen Ablauf des Verrottungsvorgangs eine ausreichende Wärmedämmung zu erzielen, befindet sich auf der Außenseite des Baustahlblechs (21) eine 40 mm dicke PU-Hartschaumschicht (24), die durch ein dünnwandiges 0,25 mm dickes Abdeckblech (25) mit Trapezsicken (26) aus Baustahl verkleidet ist. An der Unterseite des quer zur Längsrichtung des Containers (1) verlaufenden bodenseitigen Hohlprofils (2) der Öffnung zum Entleeren des Containers (1) sind Rollen (27, 28) befestigt.

Die Verwendung von Systembauelementen in Form von Profiltafeln für den Bau eines Containers bringt eine um wenigstens 50 % reduzierte Fertigungsfläche mit sich. Die vereinfachte Montage des Containers, insbesondere durch die Verwendung der vorgefertigten Profiltafeln ermöglicht einen deutlich geringeren Zeitaufwand für das Zusammenbauen der Bauteile des Containers.

Auf diese Weise wird trotz des relativ hohen Materialpreises für die Profiltafeln eine insgesamt deutliche Kostensenkung erreicht.

## Patentansprüche

1. Geschlossener quaderförmiger Container (1) zum Lagern und Verrotten organischer Abfälle, bestehend aus Seitenwänden (3, 4), Portalwänden (5, 9), Dach (6) und Boden (7) und einem durchgehenden, im Abstand vom Boden unter Bildung eines Zwischenraums (17) mit Zu- und Ableitungen (18, 19) von Luft für den Verrottungsvorgang und Ableitung für gebildete Flüssigkeit angeordneten Lochboden (16), wenigstens einer im Dach angebrachten und mit einem Deckel (13, 14) verschließbaren Beladeluke (11, 12) und der zum Entleeren zu einer der Seitenwände hin horizontal auf- und zuklappbaren Stirnportalwand (9), dadurch gekennzeichnet, daß Stahlprofile (2) durch Verbundschweißen zu einem quaderförmigen Rahmen und einem rechteckigen Rahmen für die Stirnportalwand gefügt sind und in die Rahmenfelder jeweils Profiltafeln in Sandwich-Bauweise eingefügt und umlaufend mit den die Rahmen bildenden Stahlprofilen verschweißt sind, wobei die Profiltafeln aus einem tragenden Kern aus mit Sicken (22) profiliertem Stahlblech (21), einem auf der Innenseite des Stahlblechs durch Schweißen befestigten glattflächigen, korrosionsfesten Stahlblech (23), einer auf der Außenseite des profilierten Stahlblechs angebrachten Kunststoff-Hartschaum-Schicht (24) und einer die Kunststoff-Hartschaum-Schicht verkleidenden Abdeckschicht (25) aufgebaut sind.

2. Container nach Anspruch 1, dadurch gekennzeichnet, daß die die Rahmen bildenden Stahlprofile (2) aus rechteckigen Hohlprofilen bestehen.

3. Container nach einem der Ansprüche 1 und 2, dadurch gekennzeichnet, daß das aus Baustahl bestehende Blech (21) eine Dicke von 1,5 bis 5 mm besitzt.

4. Container nach einem der Ansprüche 1 bis 3, dadurch gekennzeichnet, daß das aus Baustahl bestehende Blech (21) Trapezsicken (22) aufweist.

5. Container nach einem der Ansprüche 1 bis 4, dadurch gekennzeichnet, daß das aus korrosionsfestem Stahl bestehende Blech (23) eine Dicke von 1,5 bis 5 mm besitzt.

6. Container nach einem der Ansprüche 1 bis 5, dadurch gekennzeichnet, daß die Kunststoff-Hartschaum-Schicht (24) eine Dicke von 20 bis 60 mm besitzt.

7. Container nach einem der Ansprüche 1 bis 6, dadurch gekennzeichnet, daß die Kunststoff-Hartschaum-Schicht (24) aus Polyurethan besteht.

8. Container nach einem der Ansprüche 1 bis 7, dadurch gekennzeichnet, daß die Abdeckschicht (25) aus einem mit Trapezsicken (26) profilierten Blech aus Baustahl oder aus Kunststoffplasten mit einer Dicke von 0,1 bis 0,5 mm besteht.

9. Container nach einem der Ansprüche 1 bis 8, dadurch gekennzeichnet, daß die Sicken (22) des Stahlblechs (21) quer zur Längsrichtung des Containers verlaufen.

10. Container nach einem der Ansprüche 1 bis 9, dadurch gekennzeichnet, daß die durch die Sicken (22) des Stahlblechs (21) mit dem Stahlblech (23) und der Kunststoff-Hartschaum-Schicht (24) gebildeten Hohlräume hinterlüftet sind.

## Claims

1. A closed, cuboid container (1) for storing and rotting organic waste, consisting of side walls (3, 4), portal walls (5, 9), a roof (6) and a base (7) and a continuous perforated base (16) located at a distance from the base, forming a space (17) with feed and discharge lines (18, 19) for air for the rotting process and a discharge line for resulting liquid, at least one loading hatch (11, 12) provided in the roof and closable by means of a cover (13, 14) and the front portal wall (9) which is hinged horizontally to one of the side walls for emptying, characterised in that steel sections (2) are joined by compound welding to form a cuboid frame and a rectangular frame for the front portal wall and sectional panels in a sandwich construction are inserted into each of the frame gaps and are welded all round with the steel sections forming the frame, the sectional panels being constructed of a supporting core of steel sheet (21) profiled with beads (22), a smooth-surfaced, corrosion-resistant steel sheet (23) fastened to the inside of the steel plate by welding, a plastics/rigid foam layer (24) applied on the outside of the profiled steel plate and a covering layer (25) lining the plastics/rigid foam sheet.

2. A container according to Claim 1, characterised in that the steel sections (2) forming the frame consist of rectangular hollow sections.

3. A container according to one of Claims 1 and 2, characterised in that the sheet (21) of structural steel has a thickness of 1.5 to 5 mm.

4. A container according to one of Claims 1 to 3, characterised in that the sheet (21) of structural steel has trapezoidal beads (22).

5. A container according to one of Claims 1 to 4, characterised in that the sheet (23) of corrosion-resistant steel has a thickness of 1.5 to 5 mm.

6. A container according to one of Claims 1 to 5, characterised in that the plastics/rigid foam layer (24) has a thickness of 20 to 60 mm.

7. A container according to one of Claims 1 to 6, characterised in that the plastics/rigid foam layer (24) is made of polyurethane.

8. A container according to one of Claims 1 to 7, characterised in that the cover layer (25) consists of a sheet of structural steel profiled with trapezoidal beads (26) or of plastics plates having a thickness of 0.1 to 0.5 mm.

9. A container according to one of Claims 1 to 8, characterised in that the beads (22) of the steel sheet (21) extend transversely to the longitudinal direction of the container.

10. A container according to one of Claims 1 to 9, characterised in that the cavities formed by the beads (22) of the steel sheet (21) with the steel sheet (23) and the plastics/rigid foam layer (24) are ventilated at the rear.

## Revendications

1. Conteneur (1) parallélépipédique fermé pour stocker et pour faire pourrir des déchets organiques, constitué de parois (3, 4) latérales, de parois (5, 9) frontales, d'un toit (6) et d'un fond (7), et d'un plateau (16) perforé continu disposé à distance du fond en formant un espace (17) intermédiaire avec des conduits d'entrée (18) et de sortie (19) d'air pour l'opération de pourrissement et d'évacuation du liquide formé, d'au moins une lucarne (11, 12) de chargement ménagée dans le toit et pouvant être fermée par un couvercle (13, 14), et de la paroi (9) frontale qui, pour vider le conteneur, peut être rabattue horizontalement vers l'une des parois latérales et en revenir, caractérisé en ce que des profilés (2) en acier sont assemblés par soudage en un cadre parallélépipédique et en un cadre rectangulaire pour la paroi frontale et dans les zones des cadres il est inséré à la manière de sandwiches des panneaux profilés qui sont soudés aux profilés en acier formant les cadres, les panneaux profilés étant constitués d'une âme porteuse en tôle (21) d'acier profilé en ayant des moulures (22), d'une tôle (23) d'acier à surface lisse et résistante à la corrosion qui est fixée du côté intérieur de la tôle d'acier (21) par soudage, d'une couche de (24) mousse dure, en matière plastique, disposée sur le côté extérieur de la tôle d'acier profilé et d'une couche (25) de finition recouvrant la couche de mousse dure, en matière plastique.

2. Conteneur suivant la revendication 1, caractérisé en ce que les profilés (2) en acier formant les cadres sont constitués de profilés creux rectangulaires.

3. Container suivant l'une des revendications 1 et 2, caractérisé en ce que la tôle (21) en acier de construction a une épaisseur de 1,5 à 5 mm.

4. Container suivant l'une des revendications 1 à 3, caractérisé en ce que la tôle (21) en acier de construction a des moulures (22) trapézoïdales.

5. Container suivant l'une des revendications 1 à 4, caractérisé en ce que la tôle (23) en acier résistante à la corrosion a une épaisseur de 1,5 à 5 mm.

6. Container suivant l'une des revendications 1 à 5, caractérisé en ce la couche (24) de mousse dure, en matière plastique, a une épaisseur de 20 à 60 mm.

7. Container suivant l'une des revendications 1 à 6, caractérisé en ce la couche (24) de mousse dure, en matière plastique, est en polyuréthanne.

8. Container suivant l'une des revendications 1 à 7, caractérisé en ce la couche (25) de finition est constituée d'une tôle en acier de construction profilée en ayant des moulures (26) trapézoïdales ou d'un panneau en matière plastique d'une épaisseur de 0,1 à 5 mm.

9. Container suivant l'une des revendications 1 à 8, caractérisé en ce les moulures (22) de la tôle (21) en acier s'étendent transversalement à la direction longitudinale du conteneur.

10. Container suivant l'une des revendications 1 à 9, caractérisé en ce que les cavités formées par les moulures (22) de la tôle (21) en acier avec la tôle (23) en acier et la couche (24) de mousse dure, en matière plastique, sont aérées.
